Europäisches Patentamt

European Patent Office

Office européen des brevets

(11) Publication number: **0 169 998**
**B1**

(12) **EUROPEAN PATENT SPECIFICATION**

(45) Date of publication of patent specification: **31.08.88**

(51) Int. Cl.⁴: **F 16 D 65/04,** F 16 D 69/04

(21) Application number: **85106503.7**

(22) Date of filing: **28.05.85**

(54) **Disc brake pad.**

(30) Priority: **29.06.84 US 626265**

(43) Date of publication of application:
**05.02.86 Bulletin 86/06**

(45) Publication of the grant of the patent:
**31.08.88 Bulletin 88/35**

(84) Designated Contracting States:
**DE FR GB IT**

(56) References cited:
**EP-A-0 061 107**
**DE-A-2 427 040**
**DE-A-2 508 720**
**GB-A-2 015 667**

(73) Proprietor: **ALLIED CORPORATION**
**Columbia Road and Park Avenue**
**P.O. Box 2245R (Law Dept.)**
**Morristown New Jersey 07960 (US)**

(72) Inventor: **Tarter, James H.**
**342 Coachman Drive**
**Apartment No. 2A Troy Michigan 48083 (US)**
Inventor: **Pastore, Michael A.**
**1028 Serafini Drive**
**Rotterdam New York 12303 (US)**

(74) Representative: **Lejet, Christian et al**
**Division Technique Service Brevets**
**BENDIX Europe 126, rue de Stalingrad**
**F-93700 Drancy (FR)**

Courier Press, Leamington Spa, England.

## Description

This invention relates to a disc brake assembly having a friction pad wherein the arcuate length of the friction pad measured at its inner radius is different from the arcuate length between nodes of a node of noise producing vibration.

Brake squeal has been a problem for automobile manufacturers for many years. Various empirical approaches have been used to mask the squeal problem in specific applications.

For instance, GB—A—2 015 667 proposes a brake disc, the friction surfaces of which are provided with slots or holes located with unequal spacing to avoid squeaking noise. EP—A—61 107 proposes various configurations of friction pads in order to improve the efficiency of the brake.

However, none of these approaches have been universally successful. Although some progress has been made to reduce brake squeal, the causes of brake squeal have not been understood.

In order to better understand brake squeal, a series of noise tests were performed on disc brakes. It was found that a disc brake rotor has ten or more axial natural frequencies and two or more torsional natural frequencies. These natural frequencies correspond to mode shapes which are represented by one or more nodal diameters. It was found that brake squeal occurs most often at several frequencies. Changing the friction material in the disc brake may change the probability that an individual frequency may occur, however as long as the pad footprint on the rotor is unchanged, the family of squeal producing frequencies remain substantially unchanged. The favored squeal frequencies appear to coincide with one or two of the axial frequencies and one or two of the torsional frequencies found by the modal analyses of the disc brake rotor. It appears that when axial natural frequencies lower than the torsional natural frequencies are excited, the torsional natural frequencies are more likely excited. We have determined that as long as the arcuate length between the apex of the leading and trailing edges of the friction pad is different from the arcuate length between nodes of a mode of vibration, undesirable noise is less likely to occur or is reduced to a level acceptable for most human beings.

An advantage of this invention occurs through the selection of a brake pad whose arcuate length is different than the distance between nodes of a mode of vibration produced in a rotor during a brake application.

It is an object of this invention to provide a means of selecting a brake pad for use with a rotor which is less likely to excite the natural frequencies of the rotor during a brake application.

These advantages and others should be apparent from reading this specification while viewing the drawings wherein:

Figure 1 is a schematic illustration of a brake, and

Figure 2 is a graph illustrating the relationships of sound, temperature, and brake pressure, and

Figure 3 is a graph illustrating the relationship of noise frequency and sound level, and

Figure 4 is a graph illustrating the friction pad angle and axial modes of rotor vibration assembly, and

Figure 5 is a graph illustrating the relationship between friction pad angle and nodal angle, and

Figure 6 is a schematic illustration of a rotor with a typical prior art brake pad illustrated thereon, and

Figures 7, 8, 9 and 10 illustrate various brake pad designs made according to the principals of this invention positioned on a segment of a rotor.

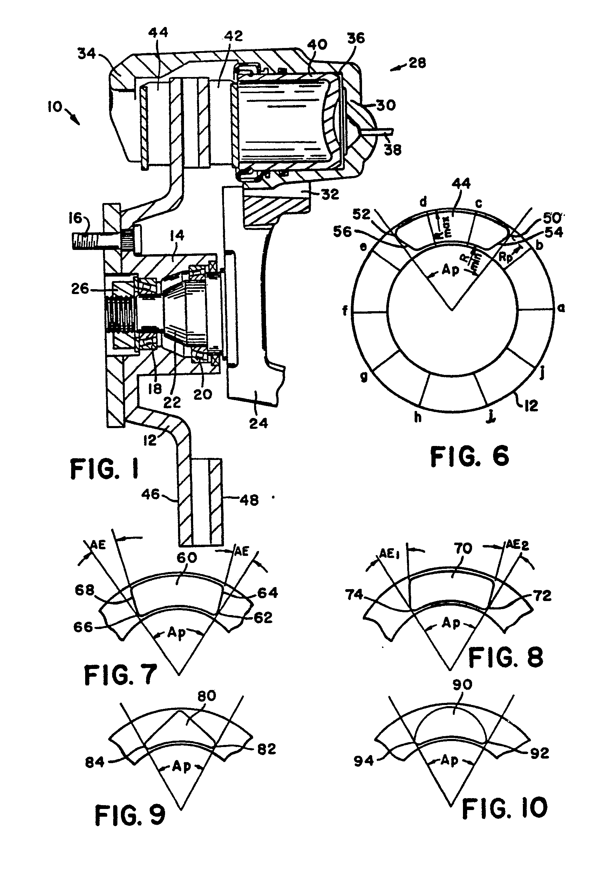

In the disc brake assembly 10 shown in Figure 1, a rotor 12 is attached to a hub 14 by bolts 16, only one of which is shown. Hub 14 is carried on bearings 18 and 20 located on axle 22 which extends from the frame 24 of a vehicle. A nut 26 retains hub 14 on axle 22.

A caliper member 28 has a housing 30 which can move in slot 32 and an arm 34 which extends around and over a portion of rotor 12 to position friction pad 44 adjacent an annular surface 46 on the rotor 12. The housing 30 has a bore 36 which is connected to a source of hydraulic fluid through conduit 38. A piston 40 located in bore 38 has a friction pad 42 connected thereto. In response to a brake signal, fluid under pressure is supplied to bore 36. This fluid pressure acts on piston 40 and moves friction pad 42 toward annular surface 48 on rotor 12. At the same time, the fluid acts on housing 30 and moves the housing 30 in slot 32 to move friction pad 44 toward surface 46 to effect a brake application. Under some brake conditions noise or brake squeal occurs during such a brake application. Such brake squeal is objected to by many vehicle operators.

In order to measure brake squeal we determined that the following parameters should be evaluated:

(1) The sound pressure level of the peaks in the sound spectrum;

(2) The frequency or frequencies of these peaks;

(3) The brake pressure at which such squeals occur;

(4) The temperature at which such squeals occur; and

(5) The operational characteristics and brake configuration associated with such a brake pad.

The complete evaluation of a brake's squeal characteristics requires that the tests be performed under a variety of conditions over an adequate period of time. It has been found that significantly different results are obtained if tests are run when the brake is heating compared with those obtained when the brake is cooling. The severity and number of the duty cycles imposed on the brake can have an effect on squeal because of the changes in the surface and bulk properties of the friction material and the rotor.

A wheel and tire (not shown) was attached to the disc brake assembly 10, by bolts 18 and the resulting structure placed in an inertia dynomometer to simulate the operation of a vehicle. Electronic equipment including a fast Fourier transformer analyzer, a digital plotter and a magnetic disc storage unit connected to a microphone were mounted close to the brake. Prior to obtaining noise data from the brake. The friction pads 42 and 48 were burnished and broken in.

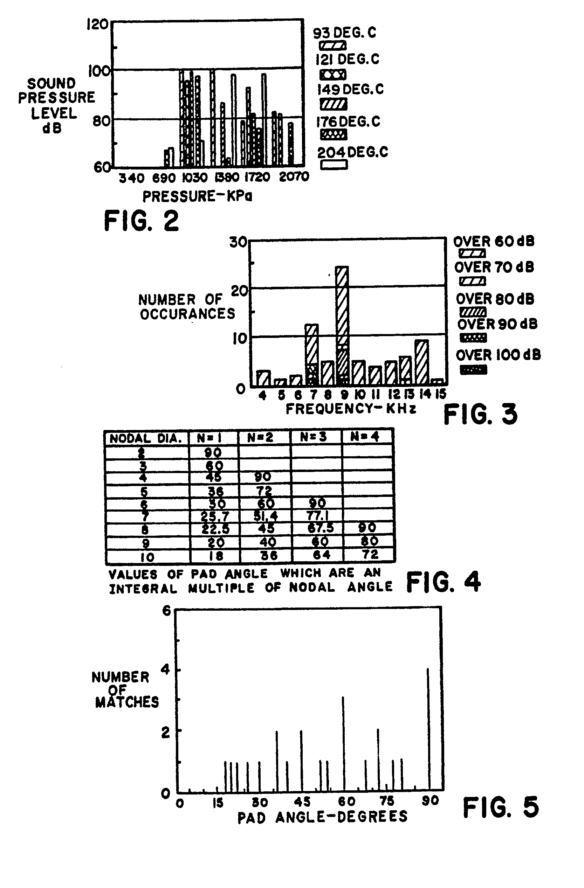

A single test for noise for a brake consists of taking noise data during stops at various points on a 5×6 or other selected matrix of pressures and temperatures as shown in Figure 2. The number of occurrences of such squeals is shown in Figure 3. As is evident from the information shown in Figure 3, the brake had a tendency to squeal at 7, 9, and 14 KHz. Modal analysis revealed that the 9 and 12 KHz squeals correspond to torsional modes of vibration while the 7 KHz corresponds to an axial mode of vibration characterized by 5 nodal diameters. On analysis of the brake pads 42 and 44, it was discovered that the pad angle Ap shown in Figure 6, was equal to twice the nodal angle (a-b, b-c, . . ., j-a) corresponding to a 7 KHz frequency. To evaluate the effect of friction pad length and squeal, friction pads 42 and 44 were beveled to reduce its footprint area to half the size as originally tested. The resulting pad angle is twice the nodal angle for a mode having 10 nodal diameters which corresponds to a natural frequency of 16.5. With this pad, the brake squeal was measured at 17 to 18 KHz.

From experimentation we found that the following geometric correlation between the footprint of a friction pad on a rotor and the favored squeal frequency which corresponds to an axial natural frequency having a nodal angle which can be found from the following relationship:

$$A_N = \frac{360}{2N_{ND}}$$

Where
$A_N$=nodal angle in degrees, and
$N_{ND}$=number of nodal diameters for a mode of vibration.

The nodal angle is simply the angle, measured from the center of the rotor between the adjacent nodal radi. Each natural frequency of a rotor has associated with it a nodal angle and a friction pad will most likely excite those axial modes of vibration whose nodal angles are closest to being an integral fraction of the pad angle.

The table in Figure 4, sets forth the value of friction pad Ap angle which is to be avoided if squeal is considered an undesirable operational characteristic.

The values of the pad angles were calculated using the following formula:

$$Ap = \frac{360N}{2N_{ND}}$$

Where the range of value for $N_{ND}$ is 2 to 10 and N is 1 to 4.

The data in Figure 4 is placed on a graph in Figure 5 to indicate the evidence of probable occurence of a squeal and pad angle to be avoided in order to prevent squeal. In Figure 5, the horizontal axis is the pad angle and the vertical axis represents the number of times that angle occurs in the table of Figure 4. Any pad angle shown in Figure 5 should be avoided when designing a friction pad and those angles represented more than once should be especially avoided.

The widest gaps between the values in Figure 5 is from 30—36 degrees, 45—51.4 degrees, 54—60 degrees, 60—67 degrees and 80—90 degrees. If the mid-point for these gaps were selected, the following should be the preferred pad angle Ap (a) 33 degrees, (b) 48.2 degrees, (c) 57 degrees, (d) 63.8 degrees, and (e) 85 degrees.

Since shorter friction pads tends to squeal at higher frequencies, the smaller pad angles should normally be used. If friction pads with square edges are used, the above pad angles (Ap) are less likely to produce undesirable noise. However, if a pad has beveled edges, a smaller pad angle should be initially selected since the friction surface increases with wear.

While evaluating squeal, we observed that a disc pad is prone to excite rotor axial mode shapes which coincide with its extremities. We also observed that the amplitudes of the vibration corresponding to a given axial mode shape are the greatest at the outside diameter of the disc surface and the least at the inside diameter of the disc surface which is stiffened by the hub of the rotor. Hence, we concluded that a disc pad whose extremities are at the inside diameter of the disc should excite the lowest possible levels of vibration.

In Figure 6, $R_{MAX}$ is the external edge of friction pad 44 and $R_{MIN}$ is the internal edge of friction pad 44. The leading edge 54 of friction pad 44 has apex 50 while the trailing edge 56 has an apex 52. The apexes 50 and 52 which define the pad angle Ap have a radius defined as Rp. As is typical for existing friction pads, Rp is either equal to $R_{MAX}$ or much closer in value to $R_{MAX}$ than $R_{MIN}$.

As a result of experiments with respect to determining the noise frequency, a friction pad 60 shown in Figure 7 was made wherein the apex 62 on the leading edge 64 and the apex 66 on the trailing edge 68 were made with the arcuate length there between substantially equal to the arcuate length along $R_{MIN}$. Subsequent tests indicated that the noise level for this type structure to be much less than one using a friction pad shaped as friction pad 44 in figure 6.

In this brake pad, the angle Ae measured between the radial line passing through the apexes 62 and 66 and the leading edge 64 and trailing edge 68 are equal.

In an effort to increase the total frictional area which engages the rotor 12, a brake pad 70 as shown in Figure 8 was made and tested. In Figure 8 angle $AE_1$ and $AE_2$ are different. However, as long as apexes 72 and 74 are located in an arcuate path that is substantially equal to $R_{MIN}$ the resulting brake pad 70 when operated under the same conditions as brake pad 60 did not develop any objectionable noise.

In a further attempt to evaluate the optimal shape of a brake pad, a triangular shape, shown in Figure 9, for pad 80 and a semi-spherical or crescentric shape, shown in Figure 10, for pad 90 were evaluated. In both brake pads 80 and 90, the apexes 82 and 84, and 92 and 94, respectively, are located on the inner radius $R_{MIN}$ and when evaluated did not produce objectionable noise.

From the test performed in evaluating various shapes of brake pads, we are able to determine that for most applications, when the arcuate length between the apex is a product of the inner radius $R_{MIN}$ and a vibration free pad angle in radians a noise free brake application can occur.

Using the preferred pad angle Ap shown in Figure 5 for most vehicles it is suggested that the distance between apexes on the leading and trailing edges should be limited to one of the following sizes:

    (a)  $R_{MIN} \times$ .576 radians;
    (b)  $R_{MIN} \times$ .841 radians;
    (c)  $R_{MIN} \times$ .994 radians;
    (d)  $R_{MIN} \times$ 1.112 radians; and
    (e)  $R_{MIN} \times$ 1.479 radians.

Since the test we performed indicated that pad angle should be as small as possible, we suggest that brake pads length be limited to either (a), (b), or (c) above and if possible (a) should be selected for most applications to reduce the possibility of creating undesirable noise.

### Claims

1. A disc brake assembly having a caliper member for locating friction pads adjacent a rotor, said pads being urged into engagement with said rotor to effect a brake application, said engagement exciting various modes of vibration in said rotor, said modes of vibration having natural frequencies with amplitudes of vibration that increase from an inner radius to an outer radius of a wear surface on said rotor, said modes of vibration under certain conditions creating undesirable noise having a brake application, said friction pad having a rubbing surface with a leading edge, a trailing edge, an inner edge corresponding to said inner radius of said wear surface and an outer edge corresponding to said outer radius of said wear surface, characterised by said leading and trailing edges having first and second apexes respectively located adjacent said inner edge and said apexes having an arcuate length different from the arcuate length betwen nodes of a mode of vibration measured at said inner radius to reduce the probability of creating noise during braking.

2. The disc brake assembly as recited in claim 1 wherein said arcuate length between said apexes is approximately equal to the product of said inner radius and from .523 to .628 radians.

3. The disc brake assembly as recited in claim 1 wherein said arcuate length between said apexes is approximately equal to the product of said inner radius and from .785 to .897 radians.

4. The disc brake assembly as recited in claim 1 wherein said arcuate length between said apexes is approximately equal to the product of said inner radius and from .942 to 1.047 radians.

5. The disc brake assembly as recited in claim 1 wherein said arcuate length between said apexes is approximately equal to the product of said inner radius and from 1.047 to 1.178 radians.

6. The disc brake assembly as recited in claim 1 wherein said arcuate length between said apexes is approximately equal to the product of said inner radius and from 1.389 to 1.570 radians.

7. The disc brake assembly as recited in claim 2 wherein said arcuate length between said apexes is approximately equal to the product of said inner radius and .576 radians.

8. The disc brake assembly as recited in claim 7 wherein said leading edge is connected to said trailing edge at said outer radius to define a substantially triangular shaped friction pad.

9. The disc brake assembly as recited in claim 7 wherein said leading edge is joined to said trailing edge at said outer radius to define a substantially crescentric shaped friction pad.

10. The disc brake assembly as recited in claim 7 wherein a first angle found through the intersection of the leading edge and a radial line that extends through said first apex and a second angle formed through the intersection of the trailing edge and a radial line that extends through said second apex are substantially identical.

11. The disc brake assembly as recited in claim 7 wherein a first angle formed through the intersection of the leading edge and a radial line that extends through said first apex and a second angle formed through the intersection of the trailing edge and a radial line through said second apex are different.

12. The disc brake assembly as recited in claim 7 wherein said arcuate length between said apexes and inner radius is greater than the arcuate length for said outer radius.

### Patentansprüche

1. Scheibenbremsenanordnung mit einem Satteilteil, um Reibkörper nahe einem Rotor anzuordnen, wobei dei Reibkörper zum Bremsen mit dem Rotor in Eingriff gedrückt werden, wobei der Eingriff verschiedene Schwingungen in dem Rotor erregt, wobei die Schwingungen natürliche Frequenzen mit Schwingungsamplituden aufweisen, die von einem inneren Radius zu einem äußeren Radius einer Eingriffsfläche des Rotors ansteigen, wobei die Schwingungen während einer Bremsung unter bestimmten Bedingungen unerwünschte Geräusche verursachen, wobei der Reibkörper eine Reibfläche mit einer Führungskante, einer Schleppkante, einer inneren Kante, die dem inneren Radius der Eingriffsfläche entspricht, und einer äußeren Kante, die dem äußeren Radius der Eingriffsfläche entspricht, aufweist, dadurch gekennzeichnet, daß die Führungs- und Schleppkanten erste und zweite Scheitel aufweisen, die jeweils nahe der Innenkante angeordnet sind und die Scheitel eine Bogenlänge aufweisen, die sich von der am inneren Radius gemessenen Bogenlänge zwischen Knoten einer Schwingungsart unterscheidet, um die Wahrscheinleichkeit einer Geräuschentwicklung während einer Bremsung zu verringern.

2. Scheibenbremsenanordnung nach Anspruch 1, dadurch gekennzeichnet, daß die Bogenlänge zwischen den Scheiteln ungefähr gleich dem Produkt aus dem inneren Radius und 0,523 bis 0,628 Radians ist.

3. Scheibenbremsenanordnung nach Anspruch 1, dadurch gekennzeichnet, daß die Bogenlänge zwischen den Scheiteln ungefähr gleich dem Produkt aus dem inneren Radius und 0,785 und 0,897 Radians ist.

4. Scheibenbremsenanordnung nach Anspruch 1, dadurch gekennzeichnet, daß die Bogenlänge zwischen den Scheiteln ungefähr gleich dem Produkt aus dem inneren Radius und 0,942 bis 1,047 Radians ist.

5. Scheibenbremsenanordnung nach Anspruch 1, dadurch gekennzeichnet, daß die Bogenlänge zwischen den Scheiteln ungefähr gleich dem Produkt aus dem inneren Radius und 1,047 bis 1,178 Radians ist.

6. Scheibenbremsenanordnung nach Anspruch 1, dadurch gekennzeichnet, daß die Bogenlänge zwischen den Scheiteln ungefähr gleich dem Produkt aus dem inneren Radius und 1,389 bis 1,570 Radians ist.

7. Scheibenbremsenanordnung nach Anspruch 2, dadurch gekennzeichnet, daß die Bogenlänge zwischen den Scheiteln ungefähr gleich dem Produkt aus dem inneren Radius und 0,576 Radians ist.

8. Scheibenbremsenanordnung nach Anspruch 7, dadurch gekennzeichnet, daß die Führungskante mit der Schleppkante am äußeren Radius verbunden ist zur Bildung eines im wesentlichen dreieckigen Reibkörpers.

9. Scheibenbremsenanordnung nach Anspruch 7, dadurch gekennzeichnet, daß die Führungskante mit der Schleppkante am äußeren Radius verbunden ist zur Bildung eines im wesentlichen sichelförmigen Reibkörpers.

10. Scheibenbremsenanordnung nach Anspruch 7, dadurch gekennzeichnet, daß ein erste Winkel, der durch den Schnitt der Führungskante mit einer radialen Linie durch den ersten Scheitel gebildet wird, und ein zweiter Winkel, der durch den Schnitt der Schleppkante mit einer radialen Linie durch den zweiten Scheitel gebildet wird, im wesentlichen identisch sind.

11. Scheibenbremsenanordnung nach Anspruch 7, dadurch gekennzeichnet, daß ein erster Winkel, der durch den Schnitt der Führungskante mit einer radialen Linie durch den ersten Scheitel gebildet wird, und einem zweiten Winkel, der durch den Schnitt der Schleppkante mit einer radialen Linie durch den zweiten Scheitel gebildet wird, verschieden sind.

12. Scheibenbremsenanordnung nach Anspruch 7, dadurch gekennzeichnet, daß die Bogenlänge zwischen den Scheiteln am inneren Radius größer ist als die Bogenlänge für den äußeren Radius.

**Revendications**

1. Ensemble de frein à disque ayant un étrier destiné à placer des plaquettes de frottement à proximité d'un rotor, lesdites plaquettes étant poussées en contact avec ledit rotor pour effectuer une application du frein, ledit contact excitant différents modes de vibration dudit rotor, lesdits modes de vibration ayant des fréquences naturelles avec des amplitudes de vibration qui augmentent depuis un rayon intérieur jusqu'à un rayon extérieur d'une surface d'usure formée sur ledit rotor, lesdits modes de vibration créant, sous certaines conditions, un bruit indésirable pendant une application du frein, ladite plaquette de frottement ayant une surface de frottement comportant un bord avant, un bord arrière, un bord interne correspondant audit rayon intérieur de ladite surface d'usure et un bord externe correspondant audit rayon extérieur de ladite surface d'usure, caractérisé par le fait que lesdits bords avant et arrière ont un premier et un second nez respectivement situés à proximité dudit bord interne et en ce que les nez sont distants d'un longueur courbe différente de la longueur étant mesurée audit rayon intérieur, afin de réduire la probabilité de créer un bruit pendant le freinage.

2. Ensemble de frein à disque suivant la revendication 1, dans lequel ladite longueur courbe entre lesdits nez est approximativement égale au produit dudit rayon intérieur et de 0,523 à 0,628 radians.

3. Ensemble de frein à disque suivant la revendication 1, dans lequel ladite longueur courbe entre lesdits nez est approximativement égale au produit dudit rayon intérieur et de 0,785 à 0,897 radians.

4. Ensemble de frein à disque suivant la revendication 1, dans lequel ladite longueur courbe entre lesdits nez est approximativement égale au produit dudit rayon intérieur et de 0,942 à 1,047 radians.

5. Ensemble de frein à disque suivant la revendication 1, dans lequel ladite longueur courbe entre lesdits nez est approximativement égale au produit dudit rayon intérieur et de 1,047 à 1,178 radians.

6. Ensemble de frein à disque suivant la revendication 1, dans lequel ladite longueur courbe entre lesdits nez est approximativement égale au produit dudit rayon intérieur et de 1,389 à 1,570 radians.

7. Ensemble de frein à disque suivant la revendication 2, dans lequel ladite longueur courbe entre lesdits nez est approximativement égale au produit dudit rayon intérieur et de 0,576 radians.

8. Ensemble de frein à disque suivant la revendication 7, dans lequel ledit bord avant est raccordé audit bord arrière audit rayon extérieur pour délimiter une plaquette de frottement de forme substantiellement triangulaire.

9. Ensemble de frein à disque suivant la revendication 7, dans lequel ledit bord avant est relié audit bord arrière audit rayon extérieur pour délimiter une plaquette de frottement substantiellement en forme de croissant.

10. Ensemble de frein à disque suivant la revendication 7, dans lequel un premier angle formé par l'intersection du bord avant et d'une ligne radiale qui passe par ledit premier nez et un second angle formé par l'intersection du bord arrière et d'une ligne radiale qui passe par ledit second nez sont substantiellement identiques.

11. Ensemble de frein à disque suivant la revendication 7, dans lequel un premier angle formé par l'intersection du bord avant et d'une ligne radiale qui passe par ledit premièr nez et un second angle formé par l'intersection du bord arrière et d'une ligne radiale qui passe par ledit second nez sont différents.

12. Ensemble de frein à disque suivant la revendication 7, dans lequel ladite longueur courbe entre lesdits nez au rayon intérieur est plus grande que la longueur courbe audit rayon extérieur.

0 169 998

FIG. I

FIG. 6

FIG. 7

FIG. 8

FIG. 9

FIG. IO

1

**FIG. 2**

SOUND PRESSURE LEVEL dB

120 / 100 / 80 / 60

340  690  1030  1380  1720  2070

PRESSURE—KPa

93 DEG. C
121 DEG. C
149 DEG. C
176 DEG. C
204 DEG. C

**FIG. 3**

NUMBER OF OCCURANCES

30 / 20 / 10 / 0

4 5 6 7 8 9 10 11 12 13 14 15

FREQUENCY—KHz

OVER 60 dB
OVER 70 dB
OVER 80 dB
OVER 90 dB
OVER 100 dB

| NODAL DIA. | N=1 | N=2 | N=3 | N=4 |
|---|---|---|---|---|
| 2 | 90 | | | |
| 3 | 60 | | | |
| 4 | 45 | 90 | | |
| 5 | 36 | 72 | | |
| 6 | 30 | 60 | 90 | |
| 7 | 25.7 | 51.4 | 77.1 | |
| 8 | 22.5 | 45 | 67.5 | 90 |
| 9 | 20 | 40 | 60 | 80 |
| 10 | 18 | 36 | 54 | 72 |

VALUES OF PAD ANGLE WHICH ARE AN
INTEGRAL MULTIPLE OF NODAL ANGLE   **FIG. 4**

**FIG. 5**

NUMBER OF MATCHES

6 / 4 / 2 / 0

0  15  30  45  60  75  90

PAD ANGLE—DEGREES